# EUROPEAN PATENT SPECIFICATION

(11) **EP 1 871 827 B1**
(45) Date of publication and mention of the grant of the patent: **30.05.2018**
(21) Application number: 06739138.3
(22) Date of filing: 20.03.2006
(51) Int. Cl.: C08J 9/12, C08J 9/14, C08G 18/48, C08G 18/08, C08G 101/00

(54) **PROCESS OF MAKING A POLYURETHANE FOAM**
VERFAHREN ZUR HERSTELLUNG VON POLYURETHANSCHAUMSTOFF
PROCÉDÉ DE PRÉPARATION DE MOUSSE EN POLYURÉTHANE

(30) Priority: 28.03.2005 US 91945
(43) Date of publication of application: 02.01.2008
(73) Proprietor: Momentive Performance Materials Inc., Waterford, NY 12188 (US)
(72) Inventor: BONAPERSONA, Vittorio, F-01210 Ferney Voltaire (FR)
(74) Representative: Laufhütte, Dieter
(86) International application number: PCT/US2006/010232
(87) International publication number: WO 2006/104767

(56) References cited:
- EP-A- 0 212 767
- EP-A- 0 266 854
- EP-A- 0 453 286
- EP-A- 0 523 991
- EP-A- 0 635 527
- EP-A- 1 291 371
- JP-A- 2002 012 644
- US-A- 3 210 300
- US-A- 3 645 924
- US-A- 3 959 191
- US-A- 4 568 702
- US-A- 5 736 588

## Description

### BACKGROUND OF THE INVENTION

Polyurethane and polyisocyanurate foams made in presence of a higher than usual amount of chemically generated carbon dioxide or using the sole chemically generated gas as a blowing agent tend to be very brittle at the surface making it very difficult to obtain good adhesion to a substrate. This friability can be reduced by the use of a certain catalyst or by using longer chain polyols or by heating the substrate but in all cases this represents a significant limitation or change in technology.

The introduction of certain organic polar solvents into polyisocyanurate foam forming mixtures, for example as a part of the catalyst component, has been described hitherto but the amounts so introduced have been significantly less than the amounts required in the present content; see for example, U.S. Patents Nos. 3,625,872; 3,746,709; 3,849,349; 3,896,052; 3,903,018; 4,033,908 and 4,071,482.

The use of certain aprotic solvents is mentioned in U.S. Patent Nos. 4,071,482, which relates to Highly flame-resistant polyurethane foams of improved friability and reduced brittleness without a corresponding substantial increase in flame-spread or smoke-generation characteristics are prepared by incorporating into a foamable polyurethane composition an amount of a liquid organic carbonate, such as ethylene or propylene carbonate, and 4,335,228, which relates to improve adhesion between the skin and core of laminates having rigid polyisocyanurate foam cores by incorporating a dipolar aprotic organic solvent, in a minor amount, into the reaction mixture employed to prepare the polyisocyanurate foam core.

However, although the prior art may disclose the use of water as a chemically active blowing agent, the prior art does not address the problem of lack of adhesion and increased friability of either polyurethane or polyisocyanurate foams caused by the use of a water-isocyanate reaction as a chemical blowing agent. More specifically, the prior art references above fail to disclose or suggest the use of water in such an amount that would provide carbon dioxide in an amount of at least 10 percent of the total blowing gas volume and including a dipolar aprotic solvent in an amount from about 1 percent by weight to about 10 percent by weight based on total weight of the foam forming mixture.

Further relevant prior art is constituted by US 5,736,588 A, which discloses a method of making a polyurethane foam, and JP 2002-12644 A, which discloses a method for making polyisocyanurate foams.

### BRIEF DESCRIPTION OF THE INVENTION

In accordance with the present invention, a process for making a polyurethane foam composition is provided where at least 50 percent of the blowing gas volume is carbon dioxide formed from the reaction of a polyisocyanate and water or an organic acid. The reaction mixture includes a dipolar aprotic solvent in an amount from 1 percent by weight to 10 percent by weight based on total weight of the foam forming mixture.

Advantages of the foams produced in accordance with the exemplary embodiments of the present invention exhibit improved cure and reduced friability. In addition, the reduction of friability of the foams, especially at their surface, that is achieved in accordance with the present invention results in improved adhesion of the foams and their substrates and/or less need for heating the substrates to provide an improved level of adhesion.

The term "dipolar aprotic organic solvent" is used throughout this specification and claims in its conventionally accepted sense, namely, as designating a solvent which cannot donate a suitably labile hydrogen atom or atoms to form strong hydrogen bonds with an appropriate species (or to react with a polyisocyanate); see, for example, Parker, Quaterly Reviews XVI, 163, 1962. The dipolar organic solvents used according to the invention are dialkyl sulfoxides such as dimethyl sulfoxide, diethyl sulfoxide, diisobutyl sulfoxide; phosphonates such as O,O-dimethyl, O,O-diethyl, O,O-diisopropyl methylphosphonates, O,O-di(2-chloroethyl) vinylphosphonate; tetramethylenesulfone, 1-methyl-2-pyrrolidinone, acetonitrile, and ethylene-carbonate.

The term "friability" refers to the state of the surface of the polyurethane foam; that is, the powderability of the surface when subject to pressure, which friability changes with time, while "brittleness" is used throughout this specification and claims in its conventionally accepted sense, namely refers to the internal friability of the foam structure which remains essentially unchanged with time; that is, it is structural and molecular in nature.

### DETAILED DESCRIPTION OF THE INVENTION

A method for making a polyurethane foam composition where at least 50 percent of a blowing gas volume is carbon dioxide formed by reacting a polyisocyanate and water or an organic acid and further comprises a dipolar aprotic solvent in an amount from 1 percent by weight to 10 percent by weight based on total weight of the foam forming mixture is provided according to claim 1. According to an embodiment of the present invention, incorporating dipolar aprotic solvents in either a polyurethane foam forming reaction mixture having an unusual amount of water present, it is possible to significantly reduce surface friability and obtain excellent adhesion of a foam core to facer skin without the necessity of high curing temperatures. It has also been observed that the friability of the polyurethane in the layer immediately abutting the skin facers is significantly less than is the case where a polymer foam reaction mixture, identical in composition except for the absence of the dipolar aprotic solvent, has been used.

The known methods for production of laminates include production of individual sandwich panels as well as continuous foam laminate board production. In the former process, the foam forming reaction mixture is dispensed, generally using appropriate mechanical mixing and dispensing means, between two facer sheets which have been pre-assembled in an appropriate mold. The dispensing of the foam mixture can be accomplished by pouring or spraying in accordance with well-known techniques.

In the continuous method, the polymer foam forming reaction mixture is dispensed onto a lower facing sheet which is flexible and is being continuously drawn from a supply roll and advanced on a supporting belt. Downstream from the point at which the foam forming mixture is deposited onto the lower facing sheet, a second facing sheet, dispensed from a continuous roll in the case of flexible facer material such as aluminum sheet, asphalt-saturated felt, kraft paper, or dispensed in the form of individual plates in the case of a rigid facer such as sheet steel, gypsum board wood panels is brought into contact with the upper surface of the rising foam. In general, the second facer sheet is brought into contact with the foam at the stage at which the foam forming reaction has progressed to such an extent that the foam has acquired sufficient strength to support the weight of the second facer sheet. After the completion of this step, the laminate is then passed through a shaping device to control thickness and finally through a curing zone in which the foam-cored laminate is subjected to temperatures of the order of 93°C (200 °F). The heat curing step is generally required in order to ensure adequate bonding of the foam core to the abutting surfaces of the facer sheets in addition to effecting cure of the foam core itself.

Similarly, in the case of the foam core panels which are formed by the pour-in-place method in individual molds as described above, the panels are subjected to a heat curing process, involving the use of temperatures of the order of 82°C (180 °F) in order to ensure adequate bonding of the foam core to the abutting surfaces of the facer sheets as well as completion of the cure of the foam core itself.

According to one embodiment of the present invention, at least 70 percent of the blowing gas volume is carbon dioxide formed from a reaction of polyisocyanate and water or organic acid. In addition, a physical blowing agent may be included that comprises 30 percent or less of the total blowing gas volume

According to the present invention, an appropriate quantity from 1 percent by weight to 10 percent by weight based on the total weight of the foam forming mixture, of the dipolar aprotic solvent is added to the polyisocyanate or to the polyol component or, if desired, split between each of these two components of the foam-forming reaction mixture. Having included the solvent in the foam reaction mixture in this manner, the production of the laminate can then proceed using any of the methods known in the art without the necessity to modify or change any of the conventionally used procedures.

It has been found that, by so incorporating the dipolar aprotic solvents in the foam forming reaction mixtures where at least 50 percent of the blowing gas volume is carbon dioxide formed by the reaction of polyisocyanate and water or organic acid, it is possible to obtain excellent adhesion of a foam core to facer skin without the necessity to use curing temperatures of the above-mentioned order. This holds true for a wide range of thickness of the foam core from as little as 1,27 cm (0.5 inches) to as high as 10,16 cm (4 inches) or greater. Thus, it has been found that curing temperatures as low as 38°C (100 °F) are entirely adequate for obtaining good adhesion when employing the improvement of the present invention.

Any of the polyisocyanates conventionally employed in the art of preparing polyisocyanurate foams can be employed in the foam reaction mixtures discussed above. According to another embodiment of the present invention, polyisocyanates known as polymethylene polyphenyl polyisocyanates can be employed in the foam reaction mixtures discussed above. According to another embodiment of the present invention, polymethylene polyphenyl polyisocyanates comprise from 20 to 85 percent by weight of methylenebis(phenyl isocyanate) the remainder of the mixture being polymethylene polyphenyl polyisocyanates of functionality greater than 2.0. A detailed description of these polyisocyanates and methods for their preparation is found in U.S. Pat. No. 3,745,133.

According to another embodiment of the present invention, any organic polyisocyanate may be used in the process of the present invention. Suitable polyisocyanates include aromatic, aliphatic, araliphatic and cycloaliphatic polyisocyanates and combinations thereof. Examples of useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,4-cyclohexane diisocyanate, hexahydrotoluene diisocyanate and its isomers, 1,5-naphthylene diisocyanate, 1-methyl-phenyl-2,4-phenyl diisocyanate, 4,4-diphenyl-methane diisocyanate, 2,4'-diphenyl-methane diisocyanate, 4,4'-biphenylene diisocyanate, 3,3'-dimethoxy-4,4'-biphenylene diisocyanate and 3,3'-dimethyl-diphenyl-propane-4,4'-diisocyanate; triisocyanates such as 2,4,6-toluene triisocyanate; and polyisocyanates such as 4,4'-dimethyldiphenyl-methane-2,2', 5,5-tetraisocyanate and the polymethylene polyphenylpolyisocyanates. According to another embodiment of the present invention, the polyisocyanate is polymethylene polyphenyl polyisocyanate, meta or para pheylene diisocyanate, hexamethylene diisocyanate, toluene diisocyanate and diphenylmethane diisocyanate.

Similarly, any of the polyols conventionally employed in the production of polyisocyanurate foams can be employed in the foam reaction mixture employed in preparing laminates in accordance with this invention. Polyols employed according to the invention are polyether and polyester polyols having functionalities from 2 to 6 and molecular weights ranging from 60 up to 1000 higher. While polyols having higher molecular weights can be employed, the polyols tend to be solids or highly viscous liquids and are accordingly less desirable because of handling and miscibility considerations.

The polyols are generally employed in the foam forming reaction mixture in amounts in the range of 0.01 equivalents to 0.4 equivalents per equivalent of polyisocyanate. A detailed description and exemplification of such polyols is given in the aforesaid U.S. Pat. No. 3,745,133.

The trimerization catalysts, and the proportions thereof, which are employed in the polymer foam reaction mixtures utilized in accordance with the embodiments of the present invention can be any of those known in the art; see, for example, the aforesaid U.S. Pat. No. 3,745,133 as well as U.S. Pat. Nos. 3,896,052; 3,899,443 and 3,903,018.

The process of the invention can be applied to the preparation of laminates using any of the types of facer material (such as those exemplified above) and the advantages of improved adhesion will be manifested. However, the problem of poor adhesion is particularly acute in the case of the various metal facers and it is with metallic facers that the process of the invention finds particular application.

The laminates produced in accordance with the process of the invention can be used for all purposes for which such laminates are conventionally used. Illustratively, the laminates can be employed as thermal barriers and insulation materials in roof decks and as wall insulation in all types of construction in industrial buildings, or cold storage areas.

According to another embodiment of the present invention, a polyurethane foam composition may further comprise optional known additives such as activators, catalysts or accelerants, colorants, pigments, dyes, crosslinking/chain-extending agents, surfactants, fillers, stabilizers, antioxidants, plasticizers, or flame retardants.

For example, fillers may include conventional organic and inorganic fillers and reinforcing agents. More specific examples include inorganic fillers, such as silicate minerals, for example, phyllosilicates such as antigorite, serpentine, homblends, amphiboles, chrysotile, and talc; metal oxides, such as aluminum oxides, titanium oxides and iron oxides; metal salts, such as chalk, barite and inorganic pigments, such as cadmium sulfide, zinc sulfide and glass, inter alia; kaolin (china clay), aluminum silicate and co-precipitates of barium sulfate and aluminum silicate, and natural and synthetic fibrous minerals, such as wollastonite, metal, and glass fibers of various lengths. Examples of suitable organic fillers are carbon black, melamine, colophony, cyclopentadienyl resins, cellulose fibers, polyamide fibers, polyacrylonitrile fibers, polyurethane fibers, and polyester fibers based on aromatic and/or aliphatic dicarboxylic acid esters, and in particular, carbon fibers. According to another embodiment of the present invention, the inorganic and organic fillers may be used individually or as mixtures.

Examples of suitable flame retardants are tricresyl phosphate, tris(2-chloroethyl) phosphate, tris(2-chloropropyl) phosphate, and tris(2,3-dibromopropyl) phosphate. A suitable flame retardant in compositions of the present invention comprises FYROL PCF®, which is a tris(chloro propyl)phosphate, from Akzo Nobel Functional Chemicals.

In addition to the above-mentioned halogen-substituted phosphates, it is also possible to use inorganic or organic flame retardants, such as red phosphorus, aluminum oxide hydrate, antimony trioxide, arsenic oxide, ammonium polyphosphate (EXOLIT® from Clariant) and calcium sulfate, expandable graphite or cyanuric acid derivatives, e.g., melamine, or mixtures of two or more flame retardants, e.g., ammonium polyphosphates and melamine, and, if desired, corn starch, or ammonium polyphosphate, melamine, and expandable graphite and/or, if desired, aromatic polyesters.

According to another embodiment of the present invention, UV performance enhancers, or UV light stabilizers, may be included in the form reaction mixtures to prevent the breakdown and loss of chemical and physical properties in the composite structure due to UV light According to another embodiment of the present invention, the UV performance enhancers include Tinuvin® 1130 and Tinuvin® 292 from Ciba. Of course, any other UV performance enhancers available from Ciba or any other equivalent suppliers may be included. In addition, other UV performance enhancers may include, but are not limited to, Tinuvin® 123 and Tinuvin® 900 from Ciba.

Further details on the other conventional assistants and additives mentioned above can be obtained from the specialist literature, for example, from the monograph by J. H. Saunders and K. C. Frisch, High Polymers, Volume XVI, Polyurethanes, Parts 1 and 2, Interscience Publishers 1962 and 1964, respectively, or Kunststoff-Handbuch, Polyurethane, Volume VII, Carl-Hanser-Verlag, Munich, Vienna, 1st and 2nd Editions, 1966 and 1983.

The following examples described the manner and process of making and using the invention and comparative compositions and set forth the best mode contemplated by the inventor of carrying out the invention but is not to be construed as limiting.

### EXAMPLE 1 (inventive and non-inventive variants)

A series of model rigid-faced sandwich panels with polyurethane foam cores was prepared using the following standard procedure.

A galvanized steel plate (30 cm x 30 cm x 6 cm) adjusted to the desired temperature was placed in the bottom of a metal mold of the same size. The top of the mold was then sealed with a similar steel plate. A sufficient amount of a polyurethane foam-forming mixture (prepared by combining the components and amounts thereof shown in Table 1) was introduced into the mold so that the risen foam would entirely fill the mold cavity and reach the desired density. The mold was then placed in an oven. The foam was allowed to remain in the oven for 5 minutes at the temperature of the mold indicated in Table 1. The cured foam sandwich panel thus obtained was then removed from the oven and left to condition in a vertical position at room temperature for 24 hours. Specimens were cut in order to qualitatively test the strength of the bond between the steel plates and the foam core.

In the case of a control panel made with Foam Composition A (no solvent used; see Table I), there was relatively weak adhesion between the steel plates and the polyurethane core at a mold temperature of 35°C. However, when the mold temperature was held at a temperature of 45°C, there was a significant increase in the adhesion between the steel plates and the polyurethane core.

In the case of panels made with Foam Composition B (with ethylene carbonate used as a solvent), there was good adhesion between the steel plates and the polyurethane core at 35 °C. Further, at 45 °C, the foam to steel adhesion was even stronger. The adhesion between the steel plates and the foam core processed at 45 °C was stronger than the epoxy glue used to fix the specimen to the dynamometer clamps.

In addition, 10 minutes after the completion of the foam reaction and at room temperature, it was observed that Foam Composition A (non-inventive) showed a higher surface friability than Foam Composition B (inventive) which showed no surface friability.

**TABLE 1**

| Foam Composition | Parts By Weight | |
|---|---|---|
| | A | B |
| Daltolac® R 180 (Sucrose-Based Polyol available from Huntsman, LLC.) | 80.0 | 80.0 |
| TCPP (tris(2-chloropropyl phosphate)) | 20.0 | 20.0 |
| Niax® catalyst DMBA (dimethylbenzylamine catalyst available from GE silicones) | 2.2 | 2.2 |
| Niax® catalyst A1 (bis(dimethylaminoethyl)ether catalyst available from GE Silicones) | 0.2 | 0.2 |
| Water | 4.0 | 4.0 |
| Niax® Silicone SR 321 (available from GE Silicones) | 2.0 | 2.0 |
| Ethylene Carbonate | | 4.0 |
| Suprasec DNR (polymeric MDI available from Imperial Chemical Industries) | 155 | 155 |
| Surface friability at Ambient Temperature | YES | NO |
| Mold Temperature, °C | 35 | 35 |
| Adhesion, KPa | 82.8 | 174.4 |
| Mold Temperature, °C | 45 | 45 |
| Adhesion, KPa | 196.6 | >240 (broken epoxy glue) |

### EXAMPLE 2 (non-inventive)

A fully water blown polyisocyanurate (PIR) formulation, described in Table 2 as Foam Composition C, was introduced onto foil paper placed on a metal mold heated at 55°C. Foam Compositions D and E were prepared in a similar manner as Foam Composition C except Foam Compositions D and E further included solvents Ethylene Carbonate and Dimethylsulfoxide (DMSO), respectively. It was observed that Foam Compositions D and E showed no friability and improved adhesion between the foil paper and the polyisocyanurate core. Whereas, the polyisocyanurate core prepared using Foam Composition C showed surface friability and the foil paper completely peeled from the polyisocyanurate foam core after 10 minutes.

**TABLE 2**

| Foam Composition | Parts By Weight | | |
|---|---|---|---|
| | C | D | E |
| TERATE 2541 (a polyol available from Invista) | 22.6 | 22.6 | 22.6 |
| Water | 1.0 | 1.0 | 1.0 |
| Niax® Potassium Octoate (72% solution, available from GE Silicones) | 0.5 | 0.5 | 0.5 |
| TCPP (tris(2-chloropropyl phosphate) | 6.87 | 6.87 | 6.87 |
| Niax® Potassium Acetate (40% solution, available from GE Silicones) | 0.50 | 0.50 | 0.50 |
| Niax® Silicone L-5107(available from GE Silicones) | 0.70 | 0.70 | 0.70 |
| DMBA(dimethylbenzylamine catalyst available from Protex) | 0.50 | 0.50 | 0.50 |
| Niax® catalyst A-1 (bis(dimethylaminoethyl)ether catalyst available from GE Silicones) | 0.05 | 0.05 | 0.05 |
| Ethylene Carbonate | | 1.00 | |
| DMSO (dimethylsulfoxide) | | | 1.30 |
| | | | |
| MDI 0,2 Pa·s (200cps) (diphenylmethane diisocyanate) | 68.1 | 68.1 | 68.1 |
| INDEX, percent | 2.20 | 2.20 | 2.20 |
| | | | |
| Surface friability top | Yes | no | no |
| Paper peeling after 10 minutes | complete | partial | partial |

### EXAMPLE 3 (inventive and non-inventive variants)

Using the procedures described in Example 1, a series of form cores were formed from a completely water-borne polyurethane (PUR) formulation (Foam Composition 1) and water blown PUR formulations incorporating different aprotic solvents (Foam Compositions 2-15) as described in Table 3. The foam core prepared from the completely water blown PUR formulation (Foam Composition 1) showed high surface friability. However, the foam cores prepared from the water blown PUR formulations utilizing different aprotic solvents (Foam Compositions 2-15) all showed a reduction in surface friability and some showed an even greater reduction in surface friability depending on the amount of solvent used in the foam composition (as in Foam Compositions 7 and 8).

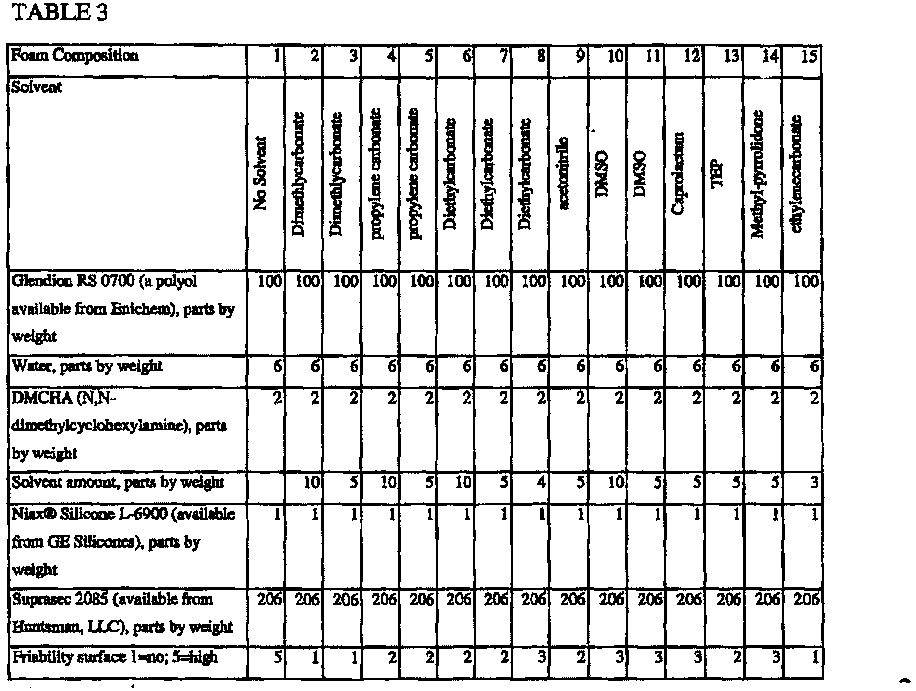

Compositions 1, 12, 13 and 15 are non-inventive, compositions 2-11 and 14 are inventive.

### EXAMPLE 4 (non-inventive)

Using the same procedures described in Example 2, a series of foam cores were prepared comprising a water and pentane blown PIR formulation (Foam Composition 16) and a water and pentane blown PIR formulations (NCO index 250) including an aprotic solvent (Foam Compositions 17-26) as described in table 4. The panel formed using the Foam Composition 16 showed severe wrinkling of the surface of the panel and high surface friabilty. Whereas, the Foam Composition 17-26 including the aprotic solvents showed a reduction in friability and in the formation of wrinkles on the surface of the panels made with these formulations and flexible facings, e.g., aluminum foil paper having a thickness of 50 µm.

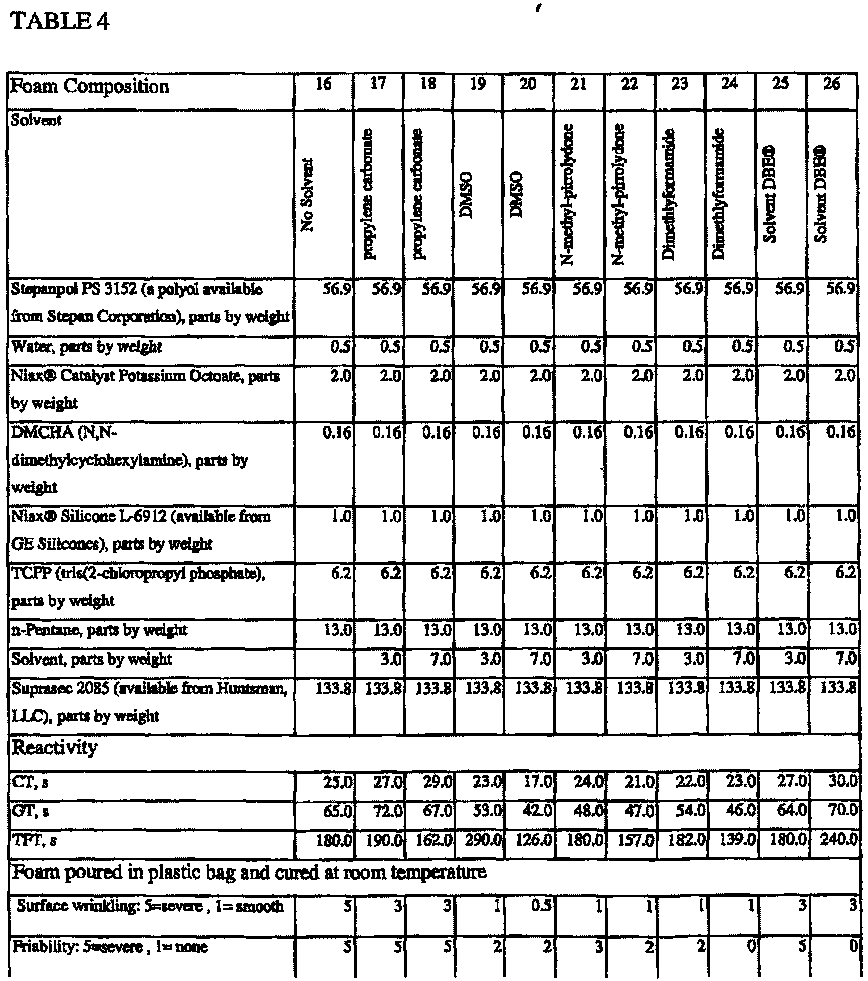

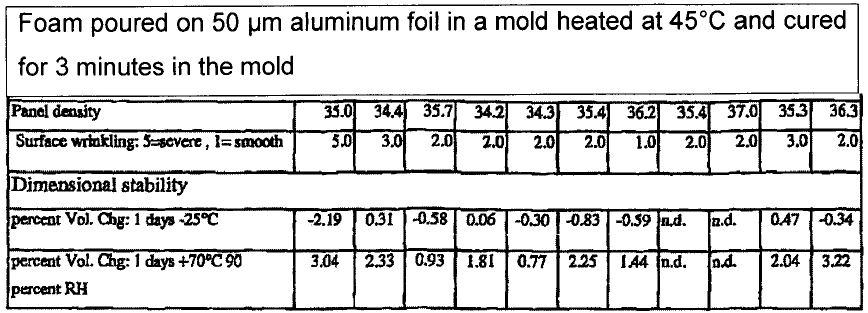

## Claims

1. A process of making a polyurethane foam from a reaction mixture comprising:
a polyisocyanate,
a polyol selected from the group of polyether polyols and polyester polyols having functionalities from 2 to 6 and molecular weights ranging from 60 up to 1000,
water or an organic acid,
a dipolar aprotic solvent, and
a catalyst for the polyurethane foam-forming reaction,
wherein
the dipolar aprotic solvent is present in an amount from 1% by weight to 10% by weight based on the total weight of the foam-forming mixture, and
the dipolar aprotic solvent is selected from the group consisting of dialkyl sulfoxide, phosphonate, tetramethylenesulfone, 1-methyl-2-pyrrolidinone, acetonitrile, and ethylene carbonate;
wherein at least 50% of the blowing gas volume is carbon dioxide formed from the reaction of polyisocyanate and water or organic acid.

2. The process according to claim 1, wherein the polyisocyanate is selected from the group consisting of aromatic polyisocyanates, aliphatic polyisocyanates, araliphatic polyisocyanates, cycloaliphatic polyisocyanates and combinations thereof.

3. The process according to claim 2, wherein the polyisocyanate is methylene bis(phenylisocyanate).

4. The process according to claim 1, wherein the dialkyl sufoxide is dimethyl sulfoxide, diethyl sulfoxide or diisobutyl sulfoxide.

5. The process according to claim 1, wherein the phosphonate is O,O-dimethyl methylphosphonate, O,O-diethyl methylphosphonate, O,O-diisopropyl methylphosphonate or O,O-di(2-chloroethyl)vinylphosphonate.

6. The process according to claim 1, wherein at least 70% of the blowing gas volume is carbon dioxide formed from the reaction of polyisocyanate and water or organic acid.

7. The process according to claim 1, wherein the dipolar aprotic solvent is present therein in an amount of from 2% by weight to 8% by weight based on the total weight of the foam-forming mixture.

8. The process according to claim 1, wherein the balance of the blowing gas volume, if any, is provided by a physical blowing agent.

9. The process according to claim 1, wherein the carbon dioxide formed from the reaction of polyisocyanate and water or organic acid is not more than 70% of the total blowing gas volume.

10. The process according to claim 9, wherein the polyurethane foam-forming reaction mixture comprises a physical blowing agent which contributes no more than 50% of the total blowing gas volume.

11. The process according to claim 10, wherein the polyurethane foam-forming reaction mixture comprises a physical blowing agent which contributes no more than 30% of the total blowing gas volume.

12. The process according to claim 8, wherein the physical blowing agent is selected from the group consisting of acetone, ethyl acetate, a halogenated alkane, butane, hexane, heptane, diethylether, a pentane, and mixtures thereof.

13. The process according to Claim 12, wherein the halogenated alkane is selected from the group consisting of methylene chloride, chloroform, ethylidene chloride, vinylidene chloride, monofluorotrichloromethane, chlorodifluoromethane, dichlorodifluoromethane, trichlorotrifluoroethane, a hydrochlorofluorocarbon compound, a hydrofluoro carbon compound, and mixtures thereof.

## Patentansprüche

1. Prozess zum Herstellen eines Polyurethanschaums aus einem Reaktionsgemisch, umfassend:
ein Polyisocyanat,
ein Polyol gewählt aus der Gruppe von Polyetherpolyolen und Polyesterpolyolen mit Funktionalitäten von 2 bis 6 und relativen Molekülmassen, die von 60 bis zu 1000 reichen,
Wasser oder eine organische Säure,
ein dipolares aprotisches Lösungsmittel und
einen Katalysator für die Polyurethanschaum bildende Reaktion,
wobei das dipolare aprotische Lösungsmittel in einer Menge von 1 Gew.-% bis 10 Gew.-% beruhend auf dem Gesamtgewicht des schaumbildenden Gemisches vorhanden ist und
das dipolare aprotische Lösungsmittel gewählt wird aus der Gruppe bestehend aus Dialkylsulfoxid, Phosphonat, Tetramethylensulfon, 1-Methyl-2-pyrrolidinon, Acetonitril und Ethylencarbonat;
wobei mindestens 50% des Treibgasvolumens Kohlendioxid ist, das aus der Reaktion von Polyisocyanat und Wasser oder organischer Säure gebildet wird.

2. Prozess nach Anspruch 1, wobei das Polyisocyanat gewählt wird aus der Gruppe bestehend aus aromatischen Polyisocyanaten, aliphatischen Polyisocyanaten, araliphatischen Polyisocyanaten, zykloaliphatischen Polyisocyanaten und Kombinationen derselben.

3. Prozess nach Anspruch 2, wobei das Polyisocyanat Methylenbis(phenylisocyanat) ist.

4. Prozess nach Anspruch 1, wobei das Dialkylsulfoxid Dimethylsulfoxid, Diethylsulfoxid oder Diisobutylsulfoxid ist.

5. Prozess nach Anspruch 1, wobei das Phosphonat O,O-Dimethylmethylphosphonat, O,O-Diethylmethylphosphonat, O,O-Diisopropylmethylphosphonat oder O,O-di(2-Chlorethyl)vinylphosphonat ist.

6. Prozess nach Anspruch 1, wobei mindestens 70% des Treibgasvolumens Kohlendioxid ist, das aus der Reaktion von Polyisocyanat und Wasser oder organischer Säure gebildet wird.

7. Prozess nach Anspruch 1, wobei das dipolare aprotische Lösungsmittel darin in einer Menge von 2 Gew.-% bis 8 Gew.-% beruhend auf dem Gesamtgewicht des schaumbildenden Gemisches vorhanden ist.

8. Prozess nach Anspruch 1, wobei der Rest des Treibgasvolumens, falls vorhanden, durch ein physikalisches Treibmittel vorgesehen wird.

9. Prozess nach Anspruch 1, wobei das aus der Reaktion von Polyisocyanat und Wasser oder organischer Säure gebildete Kohlendioxid nicht mehr als 70% des gesamten Treibgasvolumens ausmacht.

10. Prozess nach Anspruch 9, wobei das den Polyurethanschaum bildende Reaktionsgemisch ein physikalisches Treibmittel umfasst, das nicht mehr als 50% des gesamten Treibgasvolumens beiträgt.

11. Prozess nach Anspruch 10, wobei das den Polyurethanschaum bildende Reaktionsgemisch ein physikalisches Treibmittel umfasst, das nicht mehr als 30% des gesamten Treibgasvolumens beiträgt.

12. Prozess nach Anspruch 8, wobei das physikalische Treibmittel gewählt wird aus der Gruppe bestehend aus Aceton, Ethylacetat, einem halogenierten Alkan, Butan, Hexan, Heptan, Diethylether, einem Pentan und Gemischen derselben.

13. Prozess nach Anspruch 12, wobei das halogenierte Alkan gewählt wird aus der Gruppe bestehend aus Methylenchlorid, Chloroform, Ethylidenchlorid, Vinylidenchlorid, Monofluortrichlormethan, Chlordifluormethan, Dichlordifluormethan, Trichlortrifluorethan, einer Fluorchlorkohlenwasserstoffverbindung, einer Fluorkohlenwasserstoffverbindung und Gemischen derselben.

## Revendications

1. Procédé de fabrication d'une mousse de polyuréthane à partir d'un mélange réactionnel comprenant :
un polyisocyanate,
un polyol choisi dans le groupe de polyéther polyols et polyester polyols ayant des fonctionnalités allant de 2 à 6 et des masses moléculaires allant de 60 jusqu'à 1000,
de l'eau ou un acide organique,
un solvant aprotique dipolaire et
un catalyseur pour la réaction de formation de mousse de polyuréthane, où
le solvant aprotique dipolaire est présent en une quantité allant de 1 % en poids à 10 % en poids sur la base du poids total du mélange de formation de mousse, et
le solvant aprotique dipolaire est choisi dans le groupe constitué de dialkylsulfoxyde, phosphonate, tétraméthylènesulfone, 1-méthyl-2-pyrrolidinone, acétonitrile et carbonate d'éthylène ;
où au moins 50 % du volume de gaz d'expansion est du dioxyde de carbone formé par la réaction du polyisocyanate avec l'eau ou l'acide organique.

2. Procédé selon la revendication 1, dans lequel
le polyisocyanate est choisi dans le groupe constitué de polyisocyanates aromatiques, de polyisocyanates aliphatiques, de polyisocyanates araliphatiques, de polyisocyanates cycloaliphatiques et de combinaisons de ceux-ci.

3. Procédé selon la revendication 2, dans lequel
le polyisocyanate est le méthylène-bis(phénylisocyanate).

4. Procédé selon la revendication 1, dans lequel
le dialkylsufoxyde est le diméthylsulfoxyde, le diéthylsulfoxyde ou le diisobutylsulfoxyde.

5. Procédé selon la revendication 1, dans lequel
le phosphonate est le méthylphosphonate d'O,O-diméthyle, le méthylphosphonate d'O,O-diéthyle, le méthylphosphonate d'O,O-diisopropyle ou le vinylphosphonate d'O,O-di(2-chloroéthyle).

6. Procédé selon la revendication 1, dans lequel
au moins 70 % du volume du gaz d'expansion est du dioxyde de carbone formé par la réaction du polyisocyanate avec l'eau ou l'acide organique.

7. Procédé selon la revendication 1, dans lequel
le solvant aprotique dipolaire est présent ici en une quantité allant de 2 % en poids à 8 % en poids sur la base du poids total du mélange de formation de mousse.

8. Procédé selon la revendication 1, dans lequel
le reste du volume de gaz d'expansion, le cas échéant, est fourni par un agent d'expansion physique.

9. Procédé selon la revendication 1, dans lequel
le dioxyde de carbone formé par la réaction du polyisocyanate avec l'eau ou l'acide organique n'excède pas 70 % du volume total de gaz d'expansion.

10. Procédé selon la revendication 9, dans lequel
le mélange réactionnel de formation de mousse de polyuréthane comprend un agent d'expansion physique qui n'apporte pas plus de 50 % du volume total de gaz d'expansion.

11. Procédé selon la revendication 10, dans lequel
le mélange réactionnel de formation de mousse de polyuréthane comprend un agent d'expansion physique qui n'apporte pas plus de 30 % du volume total de gaz d'expansion.

12. Procédé selon la revendication 8, dans lequel
l'agent d'expansion physique est choisi dans le groupe constitué d'acétone, acétate d'éthyle, un alcane halogéné, butane, hexane, heptane, éther diéthylique, un pentane et des mélanges de ceux-ci.

13. Procédé selon la revendication 12, dans lequel
l'alcane halogéné est choisi dans le groupe constitué de chlorure de méthylène, chloroforme, chlorure d'éthylidène, chlorure de vinylidène, monofluorotrichlorométhane, chlorodifluorométhane, dichlorodifluorométhane, trichlorotrifluoroéthane, un composé hydrochlorofluorocarboné, un composé hydrofluorocarboné et des mélanges de ceux-ci.
